# EUROPÄISCHE PATENTSCHRIFT

(11) **EP 1 177 774 B1**
(45) Veröffentlichungstag und Bekanntmachung des Hinweises auf die Patenterteilung: **01.12.2004**
(21) Anmeldenummer: 01122742.8
(22) Anmeldetag: 26.09.1997
(51) Int. Cl.: A61C 3/025

(54) **Medizinisches oder dentales Handinstrument**
Medical or dental handpiece
Outil manuel médical ou dentaire

(30) Priorität: 27.09.1996 DE 19639871
(43) Veröffentlichungstag der Anmeldung: 06.02.2002
(62) Teilanmeldung aus: 99115976.5
(73) Patentinhaber: Kaltenbach & Voigt GmbH & Co. KG, 88400 Biberach/Riss (DE)
(72) Erfinder: Gugel, Bernd, 89079 Ulm-Einsingen (DE); Mohn, Uwe, 89601 Schelkingen (DE); Heckenberger, Hans, 88400 Biberach (DE); Wiek, Hans-Dieter, 88454 Hochdorf-Schweinhausen (DE)
(74) Vertreter: Schmidt-Evers, Jürgen, Dipl.-Ing.

(56) Entgegenhaltungen:
- EP-A- 0 035 040
- EP-A- 0 154 900
- US-A- 4 494 932
- US-A- 4 950 160

## Beschreibung

Die Erfindung bezieht sich auf ein medizinisches oder dentales Handinstrument.

Ein Handinstrument der vorliegenden Art ist jeweils in den Druckschriften US 2 814 877, IT 1180538 und US 4 648 840 beschrieben.

Diesen bekannten Handinstrumenten ist ein stabförmiges Handstück gemeinsam, das in seinem vorderen Bereich ein Griffteil aufweist, von dem sich eine Kanüle nach vorne und ein Schaft nach hinten erstrecken im vorderen Endbereich der Kanüle ist eine Austrittsdüse für ein Behandlungsmittel angeordnet. Am hinteren Ende des Schaftes ist ein Kupplungsanschluß für ein lösbares Ankuppeln des Handstücks an eine flexible Versorgungsleitung vorgesehen. Vom Kupplungsanschluß erstrecken sich durch das Handstück eine oder mehrere Zuführungsleitungen für das Behandlungsmittel zur Austrittsdüse.

Das in der US 2 814 877 beschriebene Handstück weist an seinem hinteren Ende einen Vorratsbehälter für das Behandlungsmittel auf. Der Kupplungsanschluß für die Versorgungsleitung ist am hinteren Ende des Vorratsbehälbers angeordnet, wobei die Zuführungsleitung sich koaxial durch den Behälter erstreckt. Das Handstück ist ein aus mehreren Längsabschnitten fest zusammengesetzter Körper. Im vorderen Endbereich des Handstücks ist ein Ventil in der Zuführungsleitung angeordnet, das durch ein quer abstehendes Betätigungselement manuell wahlweise zu öffnen oder zu schließen ist. Die Austrittsöffnung befindet sich am vorderen Ende einer vom Handstück vorragenden Kanüle, deren freies Ende bezüglich der Längsmittelachse des Handinstruments schräg nach vorne verläuft.

Ein mit dem vorbeschriebenen bekannten Handinstrument etwa vergleichbares bekanntes Handinstrument ist in der IT 1180538 beschrieben. Dieses Handinstrument weist in seinem hinteren Endbereich ebenfalls eine Vorratskammer für das Behandlungsmittel auf, wobei in der vorderen Hälfte des Handstücks eine erste und eine zweite Wirbelkammer für das Behandlungsmittel angeordnet sind. Ein in der US 4 648 840 beschriebenes dentales Handinstrument weist im Unterschied zu den vorbeschriebenen Bauweisen einen seitlich abstehenden Vorratsbehälter auf, der im hinteren Endbereich des Handinstruments angeordnet ist.

US-A-4 950 160 offenbart ein dentales Handinstrument mit einer Kanüle, einer Auslaßöffnung am vorderen Ende der Kanüle für den Austritt eines abrasiven Behandlungsmittels und eines Transportfluids, und einem Kupplungsanschluß zum Ankuppeln des Handinstruments an eine Versorgungsleitung für wenigstens ein Transportfluid, wobei der Kupplungsanschluß ein Kupplungsteil einer Schraubkupplung aufweist.

Ein vorliegendes Handinstrument hat u.a. zwei Forderungen zu erfüllen. Zum einen soll es handhabungsfreundlich sein, um mit möglichst wenig Kraftanstrengung das Handinstrument bei seinem Gebrauch gezielt und sicher bewegen und führen zu können. Zum anderen ist eine einfache und kostengünstig herstellbare Bauweise angezeigt, die insbesondere unter Berücksichtigung des zur Verfügung stehenden verhältnismäßig geringen Bauraums von wesentlicher Bedeutung ist. Dabei ist zu berücksichtigen, daß die Zuführungsleitung zwischen dem der Versorgungsleitung zugehörigen Kupplungsteil und dem dem Handinstrument zugehörigen Kupplungsteil sowie der weiterführenden Zuführungsleitung kompliziert ist und zur Herstellung dieser Zuführungsleitungsabschnitte ein verhältnismäßig großer Herstellungs- und Zeitaufwand erforderlich ist, wodurch auch hohe Herstellungskosten vorgegeben sind.

Der Erfindung liegt die Aufgabe zugrunde, ein medizinisches oder dentales Handinstrument der vorliegenden Art so auszugestalten, daß eine einfachere und bessere Handhabung möglich ist.

Diese Aufgabe wird durch die Merkmale des Anspruchs 1 gelöst.

Bei dieser erfindungsgemäßen Ausgestaltung läßt sich das Griffteil mit einer Kanüle unabhängig vom dahinter angeordneten Schaft leicht und handhabungsfreundlich drehen und die Austrittsöffnung in wahlweise Stellungen bringen. Hierdurch wird eine gezielte Behandlung der Zähne eines Kiefers oder des Unter- und Oberkiefers wesentlich erleichtert.

Es ist außerdem vorteilhaft, den Kupplungsanschluß seitlich am Handinstrument anzuordnen. Hierdurch kann die wirksame Hebelbelastung, die die flexible Versorgungsleitung bei der Handhabung des Handinstruments auf letzteres ausübt, wesentlich reduziert werden. Dies ist dadurch zu erklären, daß zum einen aufgrund des seitlichen Kupplungsanschlusses der wirksame Belastungsschwerpunkt der flexiblen Versorgungsleitung zum Handinstrument hin verlagert wird. Zum anderen läßt sich der Wirkabstand, den die Anschlußkupplung vom Griffteil aufweist, wesentlich verringern, so daß auch dadurch das Stabilisierungsmoment, das die Bedingungshand bei der Handhabung des Handinstruments aufbringen muß, wesentlich reduziert ist. Die vorteilhafte Folge davon ist, daß die Behandlungsperson das Handinstrument einfacher, leichter und mit geringerer Aufmerksamkeit bewegen und führen kann. Infolgedessen kann die Behandlungsperson sich vermehrt der eigentlichen Behandlung widmen, so daß auch eine Verbesserung der Qualität der Behandlung erreichbar ist.

Die an Körperteilen, insbesondere Zähnen, vorhandenen Beläge oder Verfärbungen können unterschiedlicher Art und Festigkeit sein.

Deshalb bezweckt eine Weiterbildung der Erfindung, ein Handinstrument so auszugestalten, daß das betreffende Körperteil gezielt behandelt werden kann und/oder das Handinstrument an die jeweils erforderliche Behandlung anpaßbar ist. Dies wird durch die Merkmale des Anspruchs 4 und/oder 5 erreicht.

Gemäß Anspruch 4 können mehrere Behandlungsmittel unterschiedlicher Abtragsfähigkeit wahlweise benutzt werden. Hierdurch lassen sich unterschiedliche Beläge und/oder Verfärbungen durch ein Behandlungsmittel größerer oder geringerer Abtragsfähigkeit zum einen leistungsgerecht und zum anderen schonend und somit gezielt behandeln, z.B. mit einem Behandlungsmittel feiner, mittlerer oder grober Abtragsfähigkeit. Dabei ist zu berücksichtigen, daß insbesondere bei der Behandlung mit einem Behandlungsmittel grober Wirksamkeit je nach Aggressivität des Behandlungsmittels mit einem geringen Abtrag von Zahnsubstanz gerechnet werden kann. Dies läßt sich durch die Erfindung vermeiden oder auf ein Minimum reduzieren.

Weiterbildungs merkmale ermöglichen eine einfache und handhabungsfreundliche Anpassung des Behandlungsinstruments an unterschiedliche Behandlungsmittel, wobei auch die Auswahl zur Durchführung der Anpassung vereinfacht und erleichtert wird.

Eine andere Weiterbildung bezweckt, den Innenraum des Handstücks vor Verunreinigung zu schützen. Bei der Ausgestaltung nach Anspruch 8 wird im Funktionsbetrieb der Innenraum des Handstücks unter Überdruck gesetzt, der ein Eindringen von Verunreinigungen und Krankheitserregern durch Spalten und Fugen verhindert.

Eine weitere Weiterbildung ein Handinstrument der im Oberbegriff des Anspruchs 9 beschriebenen Art so auszugestalten, daß eine Verunreinigung der Kupplung verhindert ist. Bei der Ausgestaltung nach Anspruch 9 erfolgt eine selbsttätige Schließung der Zuführungsleitung zur Kupplung hin. Hierdurch werden bei einer Verstopfung des Handinstruments Druckentlastungsgeräusche und Verunreinigungen beim Öffnen der Kupplung vermieden.

Eine weitere Weiterbildung bezweckt, ein Handinstrument der im Oberbegriff des Anspruchs 11 beschriebenen Art so auszugestalten, daß unabhängig von der Stellung des Handinstruments ein im wesentlichen gleichmäßiges Gemisch aus dem Trägerfluid und dem abrasiven Behandlungsmittel erreicht wird. Bei der Ausgestaltung nach Anspruch 11 befindet sich die Einlaßöffnung für das Transportfluid und die innere Auslaßöffnung für das Gemisch im mittleren Bereich der Aufnahmekammer des Vorratsbehälters. Hierdurch befinden sich diese Öffnungen in einer Zone der Aufnahmekammer, in der unabhängig von der Stellung des Handinstruments eine im wesentlichen gleichmäßige Gemischmenge und -konzentration durch die innere Auslaßöffnung ausströmen können. Dies ist von wesentlichem Vorteil, da das Handinstrument bei der Behandlung insbesondere im Mundraum eines Patienten in unterschiedlichen Stellungen gehalten werden kann und trotzdem ein im wesentlichen konstantes Gemisch aus der Auslaßöffnung am Griffteil austritt.

Eine weitere Weiterbildung der Erfindung bezieht sich im übrigen gemäß Anspruch 20 auch auf eine vorteilhafte Druckentlastungsvorrichtung für den Vorratsbehälter, die ein sauberes Öffnen des Vorratsbehälters auch dann ermöglicht, wenn dieser unter Druck steht, z.B. beim Vorhandensein einer Verstopfung im Bereich des Handinstruments.

Nachfolgend werden die Erfindung und weitere durch sie erzielbare Vorteile anhand von vereinfachten Zeichnungen und vorteilhaften Ausführungsbeispielen näher erläutert. Es zeigt:
- Fig. 1: ein erfindungsgemäßes medizinisches oder insbesondere zahnärztliches Handinstrument im vertikalen Längsschnitt;
- Fig. 2: eine Kanüle des Handinstruments im vertikalen Längsschnitt;
- Fig. 3: den Schnitt III-III in Fig. 1;
- Fig. 4: die in Fig. 1 mit X gekennzeichnete Einzelheit in der Draufsicht.

Die Hauptteile des Handinstruments 1 sind ein stabförmiges Handstück 2, ein Vorratsbehälter 3 für ein pulverförmiges abrasives Behandlungsmittel, der im hinteren Bereich des Handinstruments 1 angeordnet ist, ein Kupplungsanschluß 4 zum lösbaren Ankuppeln des Handinstruments 1 an eine flexible Versorgungsleitung eines Behandlungsstuhls oder dergleichen, eine Auslaßöffnung 5 im vorderen Endbereich des Handinstruments 1 und Zuführungsleitungen, die sich vom Kupplungsanschluß 4 durch das Handinstrument 1 bis zur Auslaßöffnung 5 erstrecken.

Bei der vorliegenden bevorzugten Ausgestaltung besteht das Handstück 2 aus einem vorderen Handstückteil, das ein Griffteil 6 bildet, und einem hinteren Handstückteil, das einen sich vom Griffteil 6 nach hinten erstreckenden Schaft 7 bildet, der an seinem hinteren Ende den Vorratsbehälter 3 trägt, und an dem der Kupplungsanschluß 4 in seitlicher Position angeordnet ist.

Das Griffteil 6 und der Schaft 7 sind hülsenförmige Körper, in deren Hohlraum 8 vorzugsweise runden Querschnitts eine oder mehrere Zuführungsleitungen sich zur Auslaßöffnung 5 hin erstrecken, die vom Kupplungsanschluß 4 ausgehen.

Bei der vorliegenden Ausgestaltung sind zwei Zuführungsleitungen 9, 11 vorhanden, nämlich eine für ein Druckgas, insbesondere Druckluft, und eine für eine Behandlungsflüssigkeit, insbesondere Wasser. Die im Bereich des seitlichen Kupplungsanschlusses 4 verlaufenden Zuführungsleitungsabschnitte 9a, 11a münden im hinteren Endbereich und bezüglich des Vorratsbehälters 3 an einer nach vorne versetzten Leitungsverbindung 9c, 11c in weiterführende Leitungsabschnitte bzw. hier in den Hohlraum 8. Dabei erstrecken sich die Zuführungsleitungsabschnitte 9a, 11a vorzugsweise schräg und zwar nach vorne konvergent in eine Hülsenverdickung hinein, an der ein Anschlußstutzen 12 angeformt ist, insbesondere in der vorgegebenen Schräglage, die mit der Längsmittelachse 10 des Handstücks 2 einen spitzen Winkel W, hier von etwa 40 bis 60°, insbesondere etwa 45° bis 55°, einschließt.

Das Handinstrument 1 dient dazu, beispielsweise Beläge, insbesonde an Zähnen, mittels eines an der Düse oder Auslaßöffnung 5 unter Druck ausströmenden, pulverförmige Partikel enthaltenden Stromes zu reinigen, was noch beschrieben wird. Wenn als abrasives Mittel im Strom kleine harte Körner, z.B. Schleifkörner oder Corund-Körner verwendet werden, eignet sich das Handinstrument auch zum Abtragen härteren Gewebes wie Zahnschmelz, z.B. zum Abrunden von scharfen Kanten oder Höhenanpassungen. Dabei können je nach Härte der Körner auch Füllmaterialien oder Metalle von Kronen oder Inlays spanabhebend bearbeitet werden.

Der Kupplungsanschluß 4 ist Teil einer Schraubkupplung oder vorzugsweise Steck/Drehkupplung 13, mit der der Kupplungsanschluß 4 an die nicht dargestellte flexible Versorgungsleitung handhabungsfreundlich und schnell lösbar ankuppelbar ist. Die Steck/Drehkupplung 13 umfaßt einen zylindrischen Kupplungszapfen und eine ihn aufnehmende zylindrische Kupplungsausnehmung 14, wobei bei der vorliegenden Ausgestaltung der andeutungsweise dargestellte Kupplungszapfen von einem Anschlußteil der flexiblen Versorgungsleitung vorragt und die Kupplungsausnehmung 14 im Anschlußstutzen 12 angeordnet ist.

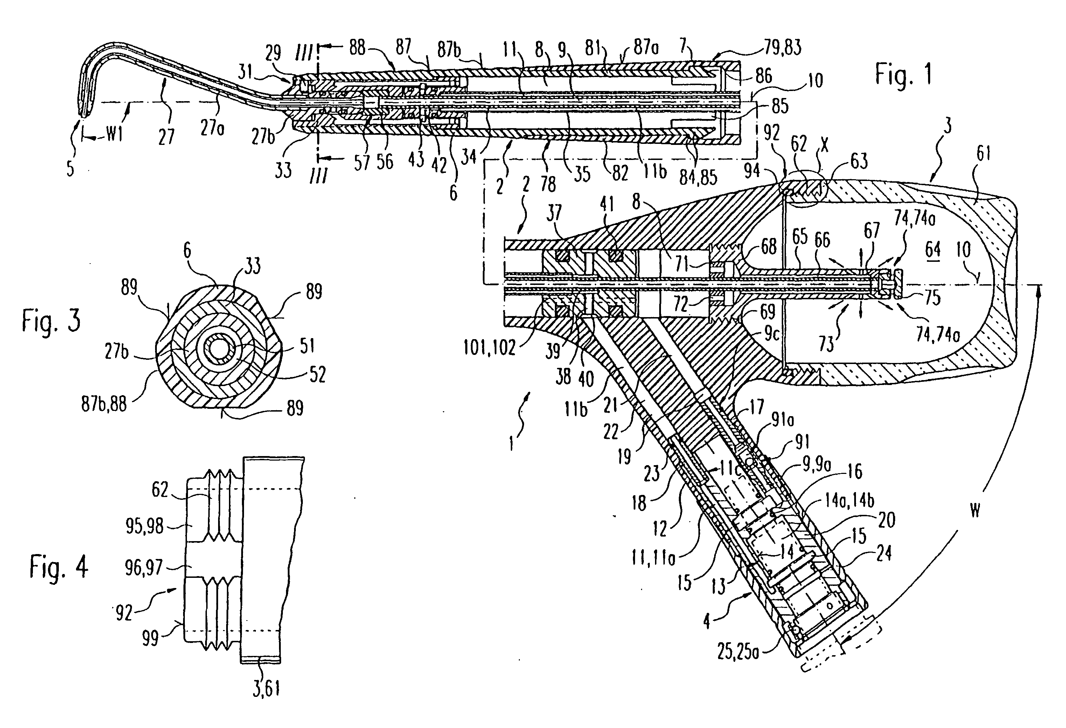

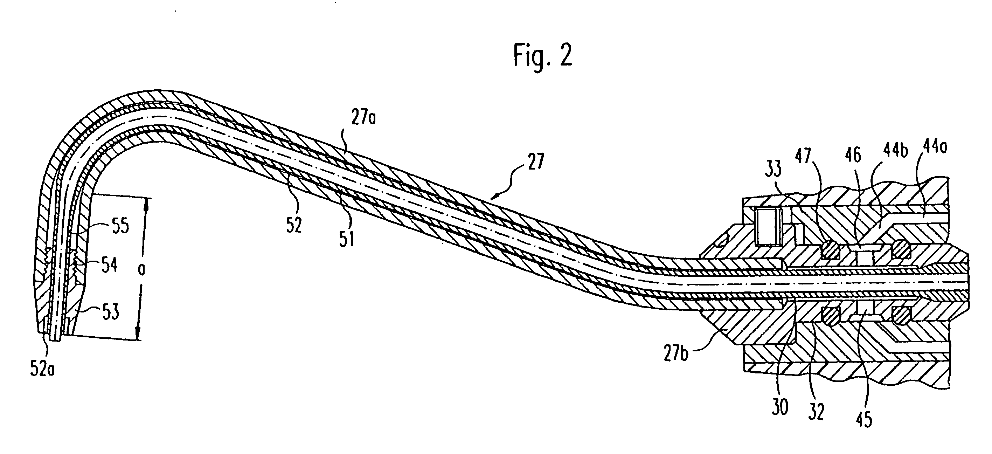

Die in der flexiblen Versorgungsleitung verlaufenden Medienleitungen, hier Wasser und Luft, erstrecken sich als achsparallele Kanäle bis in den Bereich des Kupplungszapfens, 14a, wobei sie die hohlzylindrische Teilungsfuge zwischen dem Kupplungszapfen 14a und der Kupplungsausnehmung 14b an Durchdringungsstellen Z-förmig durchsetzen. An jeder Durchdringungsstelle ist eine Ringnut 15 entweder in der Mantelfläche des Kupplungszapfens 14a oder in der Innenfläche der Kupplungsausnehmung 14b angeordnet, wobei zu beiden Seiten der Durchdringungsstelle jeweils ein Dichtungsring 16 jeweils in der Ringnut des Kupplungszapfens 14a oder der Kupplungsausnehmung 14b zur Abdichtung sitzt. Der Kupplungszapfen 14a und die Kupplungsausnehmung 14b können stufenförmig nach vorne konvergent abgestuft sein, wie es Fig. 1 zeigt, wobei die Leitungsverbindungsstellen axial versetzt in jeder Stufe vorhanden sein können.

Bei der vorliegenden Ausgestaltung ist die Kupplungsausnehmung 14b in einem zylindrischen Einsatzstück 17 angeordnet, das an seinem vorderen Ende z.B. diametral gegenüberliegend zwei vorragende Rohrstutzen 17, 18 aufweist, durch die sich die Zuführungsleitungsabschnitte 9a, 11a erstrecken, und die in eine passende Steckausnehmung 19 einsteckbar sind, von der sich die Rohrstutzen 17, 18 aufnehmende Kanäle 21, 22 erstrecken. Zur Abdichtung können jeweils in Ringnuten der Mantelfläche der Rohrstutzen 17, 18 oder in der Innenfläche der Kanäle 21, 22 angeordnete Ringdichtungen 23 vorgesehen sein. Das Einsatzteil 20 ist durch eine auf den Anschlußstutzen 12 lösbar aufgeschraubte Überwurfmutter 24 gehalten.

Zur lösbaren Sicherung der Steck/Drehkupplung 13 ist eine Verrastungsvorrichtung 25 mit einem federnden Verrastungselement 25a vorgesehen, das in eine Verrastungsausnehmung entweder im Kupplungszapfen 14a oder in der Kupplungsausnehmung 14b federnd einrastbar und zur Lösung der Steck/Drehkupplung 13 überdrückbar ist.

Bei der vorliegenden Ausgestaltung ist die Auslaßöffnung 5 am freien Ende einer sich gerade oder seitlich schräg oder quer erstreckenden Kanüle 27 angeordnet, deren freies Ende mit der Längsmittelachse 10 des Handinstruments 1 einen rechten oder stumpfen Winkel W 1 einschließt. Die Kanüle 27 ist durch ein Außenrohr 27a gebildet, dessen hinteres Ende fest mit einem hohlzylindrischen Kanülenfuß 27b verbunden ist, der durch eine Schnellschlußverbindung, hier ein Bajonettverschluß 31, mit dem vorderen Ende der Griffhülse 6 lösbar verbindbar ist. Der Bajonettverschluß 31 weist in an sich bekannter Weise einen Verschlußzapfen, hier in Form eines radialen Stiftes 29 am Kanülenfuß 24b auf, der durch Einstecken und Drehen der Kanüle 27 in einer Bajonettnut der Griffhülse 6 einführbar und vorzugsweise auch in eine Verrastungsausnehmung verrastbar ist, so daß ein ungewolltes Rückdrehen verhindert ist.

Bei der vorliegenden Ausgestaltung ist eine den Kanülenfuß 27b aufnehmende zylindrische oder stufenzylindrische Steckausnehmung 32 in einer Aufnahmehülse 33 angeordnet, die fest im hülsenförmigen Griffteil 6 angeordnet ist, z.B. durch Pressen oder Kleben. In der Aufnahmehülse 33 sind in einer rückseitigen Stufenbohrung ein Innenrohr 34 und ein Außenrohr 35 fest und dicht angesetzt, von denen sich das Innenrohr 34 koaxial bis in den mittleren Bereich des Aufnahmeraums 36 des Vorratsbehälters 3 erstreckt. Das Außenrohr 35, das das Innenrohr 34 mit einem Ringabstand umgibt, erstreckt sich bis zu einem zylindrischen Verbindungsteil 37, in dem eine Leitungsverbindung zwischen dem Leitungsabschnitt 9b und dem einen weiterführenden Leitungsabschnitt 11b bildenden Ringkanal zwischen dem Innen- und Außenrohr 35 verwirklicht ist. Das Verbindungsstück ist an die Querschnittsgröße des Hohlraums 8 angepaßt und gegen eine axiale Verschiebung darin durch geeignete Befestigungsmaßnahmen gesichert, z.B. durch Kleben oder einen Sicherungsquerstift oder eine Sicherungsquerschraube. An der Mündungsstelle des Leitungsabschnitts 11a ist im Verbindungsstück 37 ein radiales Verbindungsloch 38 angeordnet, das sich nach innen in vorderseitiges Stufenloch 39 erstreckt, in das hinein sich das hintere Ende des Außenrohrs 35 erstreckt und abgedichtet ist, z.B. durch Einpressen. Vorzugsweise ist in der Querebene des Verbindungslochs 38 eine Ringnut 40 in der Mantelfläche des Verbindungsstücks 37 vorgesehen, und es können auch mehrere Verbindungslöcher 38 auf den Umfang verteilt angeordnet sein. Zu beiden Seiten des Verbindungslochs 38 ist das Verbindungsstück 37 im Hohlraum 8 durch jeweils einen Dichtungsring 41 abgedichtet, der in einer zugehörigen Ringnut in der Mantelfläche des Verbindungsstücks 37 oder in der Innenfläche des Hohlraums 8 sitzt. Die axiale Sicherung des Verbindungsstücks 37 kann auch dadurch erfolgen, daß es mittels des Außenrohrs 35 axial unverschieblich an der Aufnahmehülse 33 gehalten ist.

Im Bereich der Aufnahmehülse 33 umgeht die Zuführungsleitung 11 das freie Ende des Kanülenfußes 27b. Dies erfolgt dadurch, daß von einem das Außenrohr 35 aufnehmenden hinteren Stufenloch 42 in der Aufnahmehülse 33 ein oder mehrere auf den Umfang verteilt angeordnete radiale Kanäle 43 ausgehen, der oder die in einen etwa achsparallel in der Aufnahmehülse 33 angeordnetes Längskanal 44a münden, der sich bis zum Kanülenfuß 27b erstreckt und durch einen Querkanal 44b in der Aufnahmehülse 33 und einen damit verbundenen Querkanal 45 im Kanülenfuß 27b mit dem Hohlraum des Außenrohrs 27a verbunden ist. Auch hier können mehrere Querlöcher 45 oder auch eine zugehörige Ringnut 46 in der Mantelfläche des Kanülenfußes 27b oder in der Innenfläche der Steckausnehmung 32 angeordnet sein, wobei zu beiden Seiten Ringdichtungen 47 angeordnet sind, die in Ringnuten im Kanülenfuß 47b oder in der Aufnahmehülse 33 sitzen.

Im Außenrohr 27a der Kanüle 27 befindet sich ein Innenrohr 51, dessen Außenquerschnittsgröße kleiner bemessen ist als die Innenquerschnittsgröße des Außenrohrs 27a, so daß sich zwischen letzterem und dem Innenrohr 51 ein Spalt 52 befindet. Wenn sich das Innenrohr 51 koaxial im Außenrohr 27a erstreckt, ist dieser Spalt 52 ein Ringspalt. Dies ist jedoch nicht erforderlich, denn das Innenrohr 51 kann einseitig am Außenrohr 27a anliegen. Das Innenrohr 51 erstreckt sich bis in den freien Endbereich des Außenrohrs 27a, wobei es mit letzterem abschließen kann, zurückstehen kann oder etwas vorstehen kann, wie es dargestellt ist. Bei der vorliegenden Ausgestaltung ist der freie Endbereich des Innenrohrs 51 in einer vorzugsweise konvergenten Kappe 53 gehalten, die mit dem zugewandten Ende des Außenrohrs 27a verschraubt ist, insbesondere mit einem Gewindeansatz 54 eingeschraubt ist.

Die Kappe 53 umgibt das Innenrohr 51 mit einem mit dem kleinen Spalt 52 vergleichbaren Abstand. Zwecks Vergleichsmäßigung der Ausströmung ist es vorteilhaft, am freien Ende des Spalts 52 eine Spaltvergrößerung 52a auszubilden.

Es ist von Vorteil, die Querschnittsgröße des Gewinderohrs 51 ein einem Abstand a vor seinem freien Ende zu verjüngen. Hierdurch werden der Querschnitt des Innenrohrs 51 verringert und die Strömungs- und Austrittsgeschwindigkeit des durchströmenden Mediums, hier Wasser, vergrößert, was zur Leistungsfähigkeit der abrasiven Behandlung beiträgt und außerdem die Vermischung der Medien mit dem abrasiven Mittel verbessert. Die Querschnittsverjüngung 55 soll vorzugsweise nicht stufig sondern allmählich bzw. konisch erfolgen, um eine zur Verstopfung neigende Kante zu vermeiden. Im übrigen Bereich des Innenrohrs 51 ist sein Innenquerschnitt etwas größer bemessen, wodurch die Verstopfungsgefahr verringert wird. Bei der vorliegenden Ausgestaltung beträgt der Abstand a etwa 5 bis 10 mm.

Der Spalt 52 setzt sich im Bereich des Kanülenfußes 27b bis hinter das Querloch 45 fort, wobei ein das Außenrohr 27a aufnehmendes Längsloch 30 gegebenenfalls stufig entsprechend groß bemessen ist. Das hintere Ende des Innenrohrs 51 ist dicht mit dem hinteren Ende des Kanülenfußes 27b verbunden, z.B. eingepreßt oder gelötet, wenn der Kanülenfuß 27b und das Innenrohr 51 aus Metall bestehen. Bei der vorliegenden Ausgestaltung ist das hintere Ende des Innenrohrs 51 in seinem Endbereich etwas verdickt und in das Längsloch 30 oder in eine Stufenvergrößerung desselben eingepreßt, wobei Dichtheit gewahrt ist.

Zur Abdichtung des hinteren Endes des Kanülenfußes 27b und des vorderen Endes des Innenrohrs 34 ist ein vorzugsweise hülsenförmiger Dichtungsring 56 vorgesehen, der im Grund der Steckausnehmung 32 sitzt, wobei vorzugsweise das vordere Ende des Innenrohrs 34 in das Loch des Dichtungsringes 56 hineinragt, das an den Außenquerschnitt des Innenrohrs 34 angepaßt ist. Die Länge des Dichtungsringes 56 ist etwas größer bemessen, als des Abstand zwischen den Innenrohren 34 und 51 oder zwischen dem Innenrohr 34 und dem Kanülenfuß 27b. Infolgedessen wird der Dichtungsring 56 beim Anmontieren der Kanüle 27, hier mit dem Bajonettverschluß, axial komprimiert, wodurch die Abdichtung dieser allgemein mit 57 bezeichneten Dichtungsvorrichtung gewährleistet ist. Der Dichtungsring 56 besteht deshalb aus elastisch zusammendrückbarem Material, wie z.B. Gummi oder Kunststoff.

Der Vorratsbehälter 3 bildet das hintere Ende des Handinstruments 1, wobei er koaxial zum Handstück 2 angeordnet ist und einen hutförmigen Deckel 61 aufweist, der durch ein in seinem freien Randbereich angeordnetes Schraubgewinde 62 mit einer flachen oder ringförmigen Behälterbasis 63 verschraubbar ist. Vorzugsweise ist die Behälterbasis 63 topfförmig ausgebildet, wodurch der Aufnahmeraum 64 des Vorratsbehälters 3 vergrößert ist. Der Deckel 61 besteht vorzugsweise aus transparentem Material, z.B. Glas, Quarz oder Kunststoff.

Das Innenrohr 34 durchsetzt das Verbindungsstück 37 im Stufenloch 39, wobei es im hinteren Abschnitt des Stufenlochs 39 dicht aufgenommen ist. Der hinter dem Verbindungsstück 37 befindliche Teil des Hohlraums 8 ist zum Aufnahmeraum 64 hin durch eine Hülse 65 verschlossen, die das Innenrohr 34 mit einem Ringspalt 66 umgibt, wobei das Innenrohr 34 sich bis zu einer oder in eine Innenschulter 67 im hinteren Endbereich der Hülse 65 erstreckt. Der Ringspalt 66 stellt eine nach hinten gerichtete Verlängerung des Hohlraums 8 dar. Die Hülse 65 ist in das durch den Hohlraum 8 gebildete Loch dicht eingesetzt oder eingeschraubt. Bei der vorliegenden Ausgestaltung ist die Hülse 65 in ihrem Querschnitt kleiner bemessen als der Querschnitt des Hohlraums 8, und sie weist einen Flansch 68 mit einem Außengewinde 69 auf, der in ein Innengewinde des Hohlraums 8 eingeschraubt ist. Der Flansch 68 selbst oder ein darin eingesetzter Stützring 71 hält den hinteren Endbereich des Innenrohrs 37 in axialer Position. Der Stützring 71 weist eine längsgerichtete Perforation oder Durchgangslöcher 72 auf, um den Durchgang der Luft in den Ringspalt 66 zu gewährleisten. In der Hülse 65 befinden sich in einer bezüglich des Aufnahmeraums 64 vorzugsweisen mittleren Position eine Mehrzahl Querlöcher 73, die den Ringspalt 66 mit dem Aufnahmeraum 64 verbinden. Es sind in der Längsrichtung der Mittelachse 10 mehrere, hier jeweils drei Querlöcher 73 vorgesehen, von denen sich der oder ein mittlerer, etwa radial und der oder ein vorderer und der oder ein hinterer nach außen divergent schräg erstrecken. Die Querlöcher 73 können auch auf dem Umfang verteilt angeordnet sein.

An ihrem etwa im mittleren Bereich des Aufnahmeraums 64 positionierten freien Ende weist die Hülse 65 wenigstens ein axiales Eintrittsloch 74 auf, das koaxial mit dem freien Innenquerschnitt des Innenrohrs 34 angeordnet ist. Bei der vorliegenden Ausgestaltung ist dem Eintrittsloch 74 eine Scheibe 75 vorgeordnet, die radiale Zugangslöcher 74a bildet. Bei der vorliegenden Ausgestaltung ist die Scheibe Teil einer Mutter, die eine entsprechende Ausnehmung mit Gewinde am hinteren Ende der Hülse 65 eingeschraubt ist.

Das Griffteil 6 und der Schaft 7 sind in einem Drehlager 78 um die Längsmittelachse 10 relativ zueinander drehbar aneinander gelagert, wobei sie gleichzeitig durch eine Verbindungsvorrichtung 79 axial aneinander gehalten sind. Das Drehlager 78 ist durch ein passendes Übergreifen der Hülsenkörper des Griffteils 6 und des Schaftes 7 gebildet. Bei der vorliegenden Ausgestaltung weist das Griffteil 6 einen von seinem hinteren Ende koaxial abstehenden, vorzugsweise verjüngten Hülsenansatz 81 auf, der von einem vorragenden Hülsenmantel 82 des Schaftes 7 mit geringem Bewegungsspiel umgeben ist. Die Verbindungsvorrichtung 79 ist durch eine Verrastungsvorrichtung 83 mit wenigstens einer radialen nach außen gerichteten Verrastungsnase 84 an einen vom Hülsenansatz 81 nach hinten ragenden Verrastungsarm 85 gebildet, wobei die Verrastungsnase 84 eine Verrastungskante an der Innenseite des Hülsenansatzes 82 hintergreift. Rückseitig weist der Verrastungsarm 85 eine konvergente Einführungsfläche 86 auf, die beim Einstecken ein selbsttätiges Einbiegen der elastischen Verrastungsarme 85 bewirkt. Der Hülsenansatz 82 ist in Richtung nach vorne vorzugsweise konvergent bzw. mit einer konischen Mantelfläche 87a versehen, wobei er etwa schließend in die Mantelfläche 87 des Griffteils 6 übergeht. Die Mantelfläche 87 ist zwecks Verbesserung der Griffestigkeit mit einer Griffstruktur versehen. Bei der vorliegenden Ausgestaltung sind in der Längsrichtung einander abwechselnde Ringwellen 88 und Ringvertiefungen vorgesehen, die vorzugsweise gerundet sind und an nur geringfügig geneigten Ringflankenflächen ineinander übergehen. Die weitere Verbesserung der Grifffestigkeit weist die Mantelfläche 87b drei auf den Umfang gleichmäßig verteilt angeordnete Griffflächen 89 auf, die eine vorteilhafte Dreipunkthalterung des Griffteils 6 zwischen drei Fingern der Bedienungshand gestatten, während der Schaft 7 auf dem Mittelhandbereich insbesondere zwischen dem Zeigefinger und dem Daumen aufliegen kann. Die Auflagestelle ergibt sich im Schaft 7 in der Nähe des Anschlußstutzens 12.

Die Drehbarkeit des Griffteils 6 ermöglicht eine Anpassung der Position der Kanüle 27 an die jeweilige Behandlungsstelle. Zum Verdrehen braucht lediglich das Griffteil 6 mit dem es ergreifenden Fingern verdreht zu werden, wobei die Kanüle 27 mitgedreht wird. Dabei liegt der Schaft 7 auf dem Basisbereich zwischen dem Zeigefinger und dem Daumen des Handrückens auf. Aufgrund des Gewichtes der flexiblen Versorgungsleitung kann der Schaft 7 beim Drehen der Griffhülse 6 in seiner jeweiligen Drehstellung verbleiben.

Im Funktionsbetrieb kann gleichzeitig die Behandlungsflüssigkeit in der Zuführungsleitung 11 und Druckluft in der Zuführungsleitung 9 durch die Dreh/Steckkupplung in das Handstück 2 strömen, wobei die Druckluft zunächst nach hinten durch den Ringspalt 66 strömt und aus den Querlöchern 72 vorzugsweise verteilt in den Aufnahmeraum 64 strömt und das darin befindliche abrasive Mittel, z.B. Natriumbicarbonat oder Kaliumsulfat in Pulverform, aufwirbelt. Das so gebildete Luft/Pulvergemisch strömt durch das Eintrittsloch 74 oder beim Vorhandensein einer Scheibe 75 durch die Zugangslöcher 74a und durch das Eintrittsloch 74 in die Innenhülse 34 und weiter zur Auslaßöffnung 5, wo es sich mit dem Wasser vermischt und einen abrasiven Strom zur Entfernung von Belägen an Zähnen und dergleichen bildet. Die vorbeschriebene Zufuhr der Medien kann durch einen geeigneten Schalter ausgelöst werden. Bei der vorliegenden Ausgestaltung ist ein Fußschalter vorgesehen, der elektrisch entsprechende Öffnungsventile einer Steuereinrichtung für die Medien betätigt.

Um den Übergang des abrasiven Materials in den Bereich der Steck/Drehkupplung 13 zu verhindern, ist im Zuführungsleitungsabschnitt 9a ein Rückschlagventil 91 angeordnet, dessen Ventilkörper, vorzugsweise eine Ventilkugel, ein Rückströmen im Zuführungsleitungsabschnitt 11a sperrt. Hierdurch sind andere Handinstrumente 1, z.B. Turbine, die ebenfalls mit der Steck/Drehkupplung 13 ankuppelbar sind, vor Verunreinigung und Beschädigung durch das abrasive Mittel geschützt.

Ohne die vorbeschriebene Sperre könnte das abrasive Material z.B. durch Eigengewicht nach Abschaltung des Handinstruments 1 oder im folgenden Störungsfall in den Bereich der Steck/Drehkupplung 13 gelangen.

Im Falle einer Verstopfung der Luft/Pulvergemischzuführungs-Leitung, z.B. im Bereich der Kanüle 27 baut sich in den von der Druckluft durchströmten Räumen des Handinstruments 1 der anstehende Luftdruck auf. In diesem Druckzustand ist es ungünstig, die Steck/Drehkupplung 13 oder den Vorratsbehälter 3 zu öffnen, weil beim Öffnen der in den Hohlräumen des Handinstruments 1 befindliche Staudruck ausströmt, was insbesondere beim Vorratsbehälter 8 ungünstig ist, da beim Ausströmen Pulverpartikel mitgerissen werden, was unerwünscht ist.

Vorzugsweise ist das Rückschlagventil 91 im Bereich des Grundes einer vorderseitigen Stufenbohrung 91a angeordnet, in die eine jeweils die Rohrstutzen 17, 18 bildende Hülse mit Abstand zur das Rückschlagventil 91 aufnehmenden Stufe fest eingesetzt ist.

Der Vorratsbehälter 3 weist eine besondere Druckentlastungsvorrichtung 92 auf, die eine Druckentlastung gewährleistet, bevor der Vorratsbehälter 3 geöffnet wird, hier der Deckel 61 abgenommen wird. Die Druckentlastungsvorrichtung 92 weist in der mit dem Dichtungsring 94 zusammenwirkenden Dichtfläche 95 eine Ausnehmung 96 auf, die beim Losschrauben des Deckels 61 einen kleinen Durchgang für die unter Druck stehende Druckluft bildet, durch den diese ausströmen kann, bevor der Deckel aus dem Gewindeeingriff kommt. Bei dieser Druckentlastung findet kaum ein Pulveraustritt statt, und zwar insbesondere dann nicht, wenn der Deckel 61 in einer mit der so gebildeten Austrittsöffnung nach oben weisenden Stellung des Handinstruments geöffnet wird, in der das Pulver sich auf dem Grund des Deckels befindet. Bei der vorliegenden Ausgestaltung ist die Ausnehmung durch eine oder mehrere auf dem Umfang verteilt angeordnete Abflachungen 97 gebildet, die an der runden Mantelfläche 98 eines das Außengewinde aufweisenden Ringansatzes 99 angeordnet sind, der in seinem freien Randbereich mit dem Dichtungsring 94 zusammenwirkt. Die wenigstens eine Abflachung 97 braucht nur im freien Randbereich des Ringansatzes angeordnet zu sein. Sie kann sich jedoch auch über die gesamte Länge des Ringansatzes 99 erstrecken, wobei das Gewinde ebenfalls eine Abflachung aufweist.

Das abrasive Mittel besteht aus einem Material, das sich in Feuchtigkeit bzw. Wasser auflöst, und somit verhältnismäßig leicht von der Behandlungsstelle hier aus den Mundraum des Patienten, wieder auszuspülen ist. Zwecks Geschmacksverbesserung ist es vorteilhaft, dem abrasiven Mittel bzw. Pulver einen angenehmen Geschmacksstoff beizumischen, z.B. Zitronen- oder Orangengeschmack.

Es eignet sich ein Pulver mit einer Korngröße zwischen etwa 15 µm und 125 µm sehr gut zum Entfernen und Reinigen von Belägen auf Zähnen.

Da der Belag oder die Verschmutzung oder die Verfärbung der Zähne von unterschiedlicher Stärke oder Festigkeit sein können, ist es vorteilhaft, mehrere Arten Pulver mit unterschiedlicher Abtragsfähigkeit bzw. abrasiver Leistungsfähigkeit dem Handinstrument 1 jeweils in einem Vorratsbehälter zuzuordnen. Es ist auch vorteilhaft, Pulver in mehreren unterschiedlichen Korngrößen oder -bereichen, wie grob, mittel und fein oder grob und fein, in Vorratsbehältern bereitzustellen. Im letzteren Fall kann z.B. das Pulver für grobe Arbeiten eine Korngröße von 60 µm bis 100 µm aufweisen, während das Pulver für feine Arbeiten eine Korngröße zwischen 15 µm und 50 µm aufweisen kann. Die letztere Korngröße eignet sich sowohl für feine Arbeiten an empfindlichen Zähnen als auch zur Politur von Zähnen.

Es ist im weiteren vorteilhaft, dem Handinstrument 1 mehrere Kanülen 27 oder Kanülenköpfe 53 zuzuordnen, die alle zur Halterung am Handstück 2 bzw. An der Kanüle 27 passen, jedoch sich bezüglich ihrer Form und/oder Größe oder bezüglich der Größe ihrer Auslaßöffnung 5 unterscheiden. Durch die Auswahl und den Austausch einer bestimmten von unterschiedlichen Kanülen 27 oder Kanülenkappen bzw. -Köpfen 53 unterschiedlicher Formen und/oder Größen läßt sich das Handinstrument auch an schwierigen Behandlungsstellen anpassen. Eine Auswahl unterschiedlich groß gebaute Kanülen 27 oder unterschiedlich großer Auslaßöffnungen 5 ermöglicht es, die Wirksamkeit des an der Auslaßöffnung 5 austretenden Behandlungsstroms zu beeinflussen und somit die Leistungsfähigkeit zu bestimmen, um eine grobe oder mehr feine Arbeit gezielt ausführen zu können. Außerdem eignen sich Kanülen 27 mit einer unterschiedlichen Größe der Auslaßöffnung 5 für Pulver unterschiedlicher Korngröße oder unterschiedlicher Abtragsfähigkeit.

Um unterschiedliche Arten Pulver voneinander unterscheiden zu können, ist es vorteilhaft, die Arten in unterschiedlichen Farben herzustellen. Sofern mehrere unterschiedliche Kanülen 27 oder Kanülenköpfe 53 vorhanden sind, die bestimmten Pulverarten zugeordnet sind, ist es vorteilhaft, die Kanülen oder die Kanülenköpfe mit einer entsprechenden Markierung zu versehen, die die Zugehörigkeit des passenden Pulvers angibt. Vorzugsweise ist diese Markierung eine Farbmarkierung in der gleichen Farbe, die das zugehörige Pulver aufweist.

Es ist außerdem vorteilhaft, dem Handinstrument 1 mehrere unterschiedlich große, hier durch das wenigstens eine Austrittsloch 73 und/oder Eintrittsloch 74 gebildete Aus- und/oder Eintrittsdüsen für den Träger-Luftstrom und/oder für das Gemisch aus Luft und abrasivem Mittel zuzuordnen, die je nach gewünschter Korngröße des Pulvers austauschbar sind. Dabei kann vorzugsweise jeweils ein Teilesatz, bestehend aus einer Kanüle 27 und einer Aus- und/oder Eintrittsdüse, hier der hülsenförmige Düsenträger 15, bezüglich der Durchlaßöffnungen aufeinander abgestimmt sein.

Beim vorliegenden Ausführungsbeispiel bestehen das Einsatzteil 20, die Kanüle 21, die Aufnahmehülse 33, das Verbindungsstück 37, das Innen- und Außenrohr 34, 35 und die Hülse 65 sowie gegebenenfalls auch die Scheibe 75 aus insbesondere hartem Metall, vorzugsweise Stahl, wodurch ein früher Verschleiß dieser Teile vermieden wird. Das Griffteil 6 und/oder der Schaft 7 und/oder der Deckel 61 bzw. der Vorratsbehälter 3 bestehen aus Metall, Kunststoff oder vorzugsweise aus Glas. Diese Werkstoffe lassen sich auch bei schwieriger Bauform einfach und kostengünstig herstellen, und sie sind unempfindlich gegen Desinfektions- und Sterilisationsmittel. Außerdem gibt es insbesondere bei Glas keine elektrostatische Aufladung.

Im Betrieb eines vorliegenden Handinstruments 1 besteht die Gefahr, daß Feuchtigkeit und/oder abrasives Material durch kleine Spalten und Fugen im vorderen Bereich des Handstücks 2 in dessen Inneres eindringen, wo sie z.B. die Verbindung 31 für die Kanüle 27 und/oder das Drehlager 78 verunreinigen und beschädigen können. Um dies zu vermeiden, ist der Innenraum 8 des Handstücks 2 durch eine Leitungsverbindung 101 mit der Zuführungsleitung 9 für die Druckluft verbunden. Der Luftdruck kann sich somit in den Innenraum fortpflanzen, wobei er gegebenenfalls auch aus den Spalten oder Fugen austreten kann und das Eindringen der vorgenannten Verschmutzung verhindert. Bei der vorliegenden Ausgestaltung ist der sich nach hinten erstreckende Zuführungs-Leitungsabschnitt nämlich der hintere Teil des Innenraums 8 durch ein Durchgangsloch 102 im Verbindungsteil 37 mit dem vorderen Teil des Innenraumes 8 verbunden. Hierdurch kann aufgrund des Innendrucks weder in den Spalten des Drehlagers 78 noch im Bereich der Verbindungsvorrichtung 31 Schmutz eindringen.

Es ist vorteilhaft, dem abrasiven pulverförmigen Mittel Fluor oder ein fluorhaltiges Mittel, insbesondere ebenfalls in Pulverform, beizumischen. Hierdurch wird erreicht, daß bei der Behandlung Fluor in die Zahnoberfläche eindringt und diese erhärtet und stabilisiert. Aufgrund der Strömungsgeschwindigkeit und des dadurch hervorgerufenen Aufpralls der Fluor enthaltenden Partikel ist die Einwirkung in die Zahnoberfläche besonders wirksam.

## Patentansprüche

1. Medizinisches oder dentales Handinstrument (1) mit
- einem Handstück (2)und einem am Handstück (2) angeordneten Griffteil (6),
- einer Kanüle (27) am vorderen Ende des Griffteils
- einer Auslassöffnung (5) am vorderen Ende der Kanüle (27) für den Austritt eines abrasiven Behandlungsmittels und eines Transportfluids
- und einem Kupplungsanschluss (4) zum Ankuppeln des Handinstruments (1) an eine Versorgungsleitung für wenigstens ein Transportfluid, insbesondere Wasser und/oder Luft,
- wobei das Handstück (2) in seinem vorderen Bereich das Griffteil (6) aufweist, von dem sich ein Schaft (7) nach hinten erstreckt,
wobei
das Griffteil (6) und der Schaft (7) um deren Längsmittelachse (10) frei drehbar aneinander gelagert sind und der Kupplungsanschluss (4) ein Kupplungsteil einer Steck-/Drehkupplung (13) aufweist.

2. Handinstrument nach Anspruch 1,
**dadurch gekennzeichnet,**
**dass** die Griffhülse (6) einen rückseitigen Hülsenansatz (81) aufweist und der Schaft (7) einen vorderseitigen Hülsenansatz (82) aufweist, wobei die Hülsenansätze (81, 82) einander mit geringem Bewegungsspiel koaxial übergreifen, wobei vorzugsweise der Hülsenansatz (82) des Schaftes (7) den Hülsenansatz (81) des Griffteils (6) übergreift.

3. Handinstrument nach Anspruch 1 oder 2,
**dadurch gekennzeichnet,**
**dass** das Griffteil (6) und der Schaft (7) durch eine Schnellschlussverbindung, vorzugsweise eine Verrastungsvorrichtung (83), aneinander gehalten sind.

4. Medizinisches oder dentales Handinstrument nach einem der vorherigen Ansprüche
**dadurch gekennzeichnet,**
**dass** das Handinstrument (1) mit mehreren, in Vorratsbehältern angeordneten abrasiven Behandlungsmitteln unterschiedlicher Abtragfähigkeit eine Behandlungseinrichtung bildet.

5. Handinstrument nach einem der vorherigen Ansprüche,
**dadurch gekennzeichnet,**
**dass** die Auslassöffnung (5) an einer Kanüle (27) oder einem Kanülenkopf (53) angeordnet ist, die bzw. der durch eine Schnellschlussverbindung, insbesondere einen Bajonettverschluss, oder eine Schraubverbindung mit dem Handstück (2) lösbar verbunden ist, wobei vorzugsweise mehrere Kanülen (27) oder Kanülenköpfe (53) unterschiedlicher Form und/oder Größe und/oder Auslassöffnungsgröße (5) austauschbar vorgesehen sind.

6. Handinstrument nach Anspruch 4 oder 5,
**dadurch gekennzeichnet,**
**dass** sich die Arten der Behandlungsmittel durch eine unterschiedlich große Körnung unterscheiden und vorzugsweise drei unterschiedliche Behandlungsmittel für eine Grob- Mittel- und Feinbehandlung vorgesehen sind.

7. Handinstrument nach einem der Ansprüche 4 bis 6,
**dadurch gekennzeichnet,**
**dass** einer bestimmten Körnung des Behandlungsmittels eine bestimmte Größe der Auslassöffnung (5) zugeordnet ist und die Kanülen (27) oder Kanülenköpfe (53) eine die Zugehörigkeit zum zugehörigen Behandlungsmittel kennzeichnende Markierung aufweisen, wobei vorzugsweise die unterschiedlichen Arten der Behandlungsmittel unterschiedliche Farben aufweisen und die Kanülen (27) oder Kanülenköpfe ( 53) eine Markierung mit der zugehörigen gleichen Farbe aufweisen.

8. Handinstrument nach einem der vorherigen Ansprüche,
**dadurch gekennzeichnet,**
**dass** der Innenraum (8) des Handstücks (2) durch eine Leitungsverbindung (101) mit der Zuführungsleitung (9) für das Gas verbunden ist.

9. Handinstrument nach einem der vorherigen Ansprüche,
**dadurch gekennzeichnet,**
**dass** in der Zuführungsleitung (9a) ein Rückschlagventil (91) in einer dem Kupplungsanschluß (4) vorgeordneten Position angeordnet ist.

10. Handinstrument nach Anspruch 9,
**dadurch gekennzeichnet,**
**dass** das Rückschlagventil (91) in einem ein Kupplungsteil (14b) aufweisendes Einsatzteil (2) angeordnet ist.

11. Handinstrument nach einem der vorherigen Ansprüche,
**dadurch gekennzeichnet,**
**dass** es einen Vorratsbehälter (3) aufweist, in den eine Zuführungsleitung (66) mit wenigstens einer Einlassöffnung (73) mündet, und der durch wenigstens eine innere Auslassöffnung (74) und eine Verbindungsleitung (9) mit der Auslassöffnung (5) am Griffteil (6) verbunden ist, wobei die Einlassöffnung (73) und die innere Auslassöffnung (74) im mittleren Bereich des Aufnahmeraums (64) des Vorratsbehälters (3) angeordnet sind.

12. Handinstrument nach Anspruch 11,
**dadurch gekennzeichnet,**
**dass** die Zuführungsleitung (66) oder die Verbindungsleitung (9) durch einen Ringkanal gebildet ist und die jeweils andere Leitung koaxial innerhalb des Ringkanals verläuft.

13. Handinstrument nach einem der Ansprüche 11 oder 12,
**dadurch gekennzeichnet,**
**dass** der axiale Abstand zwischen der Einlaßöffnung (73) und der Auslassöffnung (74) gering ist, insbesondere nicht größer als etwa 30mm, vorzugsweise nicht größer als etwa 10mm bis 15mm ist.

14. Handinstrument nach einem der Ansprüche 11 bis 13,
**dadurch gekennzeichnet,**
**dass** die innere Auslassöffnung (74) hinter der Einlaßöffnung (73) angeordnet ist.

15. Handinstrument nach einem der Ansprüche 11 bis 14,
**dadurch gekennzeichnet,**
**dass** die Zuführungsleitung (66) und die Verbindungsleitung (9) durch eine sich in den Aufnahmeraum (64) des Vorratsbehälters (3) erstreckende Doppelhülse gebildet sind.

16. Handinstrument nach einem der vorherigen Ansprüche,
**dadurch gekennzeichnet,**
**dass** die Auslassöffnung (5) am freien Ende einer vom vorderen Ende des Griffteils (6) vorragenden Kanüle (27) angeordnet ist, und dass die Kanüle (27) sich in Bezug auf die Längsmittelachse (10) des Griffteils (6) - ausgehend von letzterem - zunächst schräg von dieser entfernt und ihr freies Ende dann wieder auf diese zuläuft, so dass das freie Ende mit der Längsmittelachse einen rechten oder stumpfen Winkel (W1) einschließt.

17. Handinstrument nach Anspruch 15 oder 16,
**dadurch gekennzeichnet,**
**dass** die Kanüle durch ein Außenrohr (27a) gebildet ist.

18. Handinstrument nach Anspruch 17,
**dadurch gekennzeichnet,**
**dass** im Außenrohr (27a) ein Innenrohr (51) angeordnet ist, dessen Außenquerschnittsgröße kleiner ist als die Innenquerschnittsgröße des Außenrohrs (27a), so daß sich zwischen letzterem und dem Innenrohr (51) ein Spalt (52) befindet.

19. Handstück nach Anspruch 17 oder 18,
**dadurch gekennzeichnet,**
**dass** am freien Ende der Kanüle (27) eine vorzugsweise konvergente Kappe (53) angeordnet ist und daß insbesondere die Kappe (53) mit dem Außenrohr (27a) verschraubt ist.

20. Handinstrument nach einem der vorherigen Ansprüche, **dadurch gekennzeichnet,**
**dass** es einen Vorratsbehälter (3) aufweist, in den eine Zuführungsleitung (66) mit wenigstens einer Einlassöffnung (73) mündet, und der durch wenigstens eine innere Auslassöffnung (74) und eine Verbindungsleitung (9) mit der Auslassöffnung (5) am Griffteil (6) verbunden ist, und dass der Vorratsbehälter (3) eine Druckentlastungsvorrichtung (92) aufweist, die eine Druckentlastung gewährleistet, bevor der Vorratsbehälter (3) geöffnet wird.

21. Handinstrument nach Anspruch 20,
**dadurch gekennzeichnet,**
**dass** der Vorratsbehälter (3) einen Deckel (61) aufweist und die Druckentlastungsvorrichtung (92) eine Ausnehmung (96) aufweist, die beim Losschrauben des Deckels (61) einen kleinen Durchgang für das unter Druck stehende Druckgas bzw. die Druckluft bildet, durch den es bzw. sie ausströmen kann, bevor der Deckel (61) aus dem Gewindeeingriff kommt.

22. Handinstrument nach Anspruch 21,
**dadurch gekennzeichnet,**
**dass** die Ausnehmung (96) durch eine oder mehrere auf dem Umfang verteilt angeordnete Abflachungen (97) gebildet ist, die an einer runden Mantelfläche (98) eines das Außengewinde aufweisenden Ringansatzes (99) angeordnet sind.

23. Handinstrument nach Anspruch 22,
**dadurch gekennzeichnet,**
**dass** der Ringansatz (99) in seinem freien Randbereich mit dem Dichtungsring (94) zusammenwirkt.

## Claims

1. Medical or dental hand instrument (1) having
- a handpiece (2) and a grip part (6) arranged on the handpiece (2),
- a cannula (27) at the forward end of the grip part (6),
- an outlet opening (5) at the forward end of the cannula (27) for the exit of an abrasive treatment medium and a transport fluid,
- and a coupling connection (4) for coupling the hand instrument (1) to a supply line for at least one transport fluid, in particular water and/or air,
- the handpiece (2) having in its forward region the grip part (6), from which a shaft (7) extends rearwardly,
the grip part (6) and the shaft (7) being mounted on one another freely rotatably around their longitudinal middle axis (10) and the coupling connection (4) having a coupling part of a plug-in/turn coupling (13).

2. Hand instrument according to claim 1,
**characterized in that**,
the grip sleeve (6) has a rearward sleeve extension (81) and the shaft (7) has a forward sleeve extension (82), the sleeve extensions (81, 82) engaging coaxially over one another with slight play for movement, preferably the sleeve extension (82) of the shaft (7) engaging over the sleeve extension (81) of the grip part (6).

3. Hand instrument according to claim 1 or 2,
**characterized in that**,
the grip part (6) and the shaft (7) are held on another by means of a quick-fastening connection, preferably a latching device (83).

4. Medical or dental hand instrument according to any preceding claim,
**characterized in that**,
the hand instrument (1), with a plurality of abrasive treatment media of different abrasive capabilities, arranged in supply containers, forms a treatment device.

5. Hand instrument according to any preceding claim,
**characterized in that**,
the outlet opening (5) is arranged on a cannula (27) or a cannula head (53) which is releasably connected with the handpiece (2) by means of a quick-fastening connection, in particular a bayonet fastening, or a screw connection, wherein preferably there are provided exchangeably a plurality of cannulas (27) or cannula heads (53) of different form and/or size and/or outlet opening size (5).

6. Hand instrument according to claim 4 or 5,
**characterized in that**,
the kinds of the treatment medium differ through a differently great grain size and there are preferably provided three different treatment media for coarse, medium and fine treatment.

7. Hand instrument according to claims 4 to 6,
**characterized in that**,
there is associated with a particular grain size of the treatment medium a particular size of the outlet opening (5) and the cannulas (27) or cannula heads (53) have a marking characterizing the association to the associated treatment medium, preferably the different kinds of treatment medium having different colours and the cannulas (27) or cannula heads (53) have a marking with the same associated colour.

8. Hand instrument according to any preceding claim,
**characterized in that**,
the inner chamber (8) of the handpiece (2) is connected with a delivery line (9) for the gas by means of a line connection (101).

9. Hand instrument according to any preceding claim,
**characterized in that**,
in the delivery line (9a) there is arranged a non-return valve (91) in a position before the coupling connection (4).

10. Hand instrument according to claim 9,
**characterized in that**,
the non-return valve (91) is arranged in an insert part (2) having a coupling part (14b).

11. Hand instrument according to any preceding claim,
**characterized in that**,
it has a supply container (3) into which there opens a delivery line (66) having at least one inlet opening (73), and which is connected with the outlet opening (5) on the grip part (6) by means of at least one inner outlet opening (74) and a connection line (9), the inlet opening (73) and the inner outlet opening (74) being arranged in the middle region of the receiving space (64) of the supply container (3).

12. Hand instrument according to claim 11,
**characterized in that**,
the delivery line (66) or the connection line (9) is formed by means of annular channel and the respective other line runs coaxially within the annular channel.

13. Hand instrument according to either claim 11 or 12,
**characterized in that**,
the axial spacing between the inlet opening (73) and the outlet opening (74) is slight, in particular not larger than about 30 mm, preferably not larger than about 10 mm to 15 mm.

14. Hand instrument according to any of claims 11 to 13,
**characterized in that**,
the inner outlet opening (74) is arranged behind the inlet opening (73).

15. Hand instrument according to any of claims 11 to 14,
**characterized in that**,
the delivery line (66) and the connection line (9) are formed by means of a double sleeve extending into the receiving space (64) of the supply container (3).

16. Hand instrument according to any preceding claim,
**characterized in that**,
the outlet opening (5) is arranged at the free end of a cannula (27) projecting from the forward end of the grip part (6), and **in that** the cannula (27) - with regard to the longitudinal middle axis (10) of the grip part (6), starting from the latter - initially obliquely distances itself from this and then its free end again runs towards this, so that the free end includes with the longitudinal middle axis a right angle or an obtuse angle (W1).

17. Hand instrument according to claim 15 or 16,
**characterized in that**,
the cannula is formed by means of an outer pipe (27a).

18. Hand instrument according to claim 17,
**characterized in that**,
there is arranged in the outer pipe (27a) an inner pipe (51) the outer cross-sectional size of which is less than the inner cross-sectional size of the outer pipe (27a), so that between the latter and the inner pipe (51) there is a gap (52).

19. Hand piece according to claim 17 or 18,
**characterized in that**,
there is arranged at the free end of the cannula (27) a preferably convergent cap (53), and **in that** in particular the cap (53) is screwed together with the outer pipe (27a).

20. Hand instrument according to any preceding claim,
**characterized in that**,
it has a supply container (3) into which there opens a delivery line (66) having at least one inlet opening (73) and which is connected with the outlet opening (5) on the grip part (6) by means of at least one inner outlet opening (74) and a connection line (9), and **in that** the supply container (3) has a pressure release device (92) which ensures a pressure release before the supply container (3) is opened.

21. Hand instrument according to claim 20,
**characterized in that**,
the supply container (3) has a lid (61) and the pressure release device (92) has a recess (96) which upon screwing loose of the lid (61) forms a small passage for the pressurising gas or the pressurising air standing under pressure, through which it can flow out before the lid (61) comes out of thread engagement.

22. Hand instrument according to claim 21,
**characterized in that**,
the recess (96) is formed by means of one flattening (97) or a plurality of flattenings (97) arranged distributed around periphery, which are arranged on a round outer surface (98) of an annular extension (99) having an external thread.

23. Hand instrument according to claim 22,
**characterized in that**,
the annular extension (99) cooperates in its free edge region with the sealing ring (94).

## Revendications

1. Instrument manuel médical ou dentaire (1) comprenant
- un manche (2) et une poignée (6) agencée sur le manche (2),
- une canule (27) au niveau de l'extrémité avant de la poignée (6),
- un orifice de sortie (5) au niveau de l'extrémité avant de la canule (27) pour l'évacuation d'un moyen de traitement abrasif et d'un fluide de transport,
- et un manchon d'accouplement (4) pour raccorder l'instrument manuel (1) à une conduite d'alimentation pour au moins un fluide de transport, en particulier l'eau et/ou l'air,
- le manche (2) étant muni, dans sa partie avant, de la poignée (6), à partir de laquelle une tige (7) s'étend vers l'arrière,
dans lequel instrument
la poignée (6) et la tige (7) sont montées l'une contre l'autre de manière librement rotative autour de leur axe longitudinal (10) et le manchon d'accouplement (4) comporte un élément d'accouplement d'un raccord enfichable ou rotatif (13).

2. Instrument manuel selon la revendication 1, **caractérisé en ce que** la poignée (6) comporte une saillie tubulaire arrière (81) et la tige (7) comporte une saillie tubulaire avant (82), les saillies tubulaires (81, 82) se chevauchant coaxialement l'une l'autre avec un faible jeu, sachant que, de préférence, la saillie tubulaire (82) de la tige (7) chevauche la saillie tubulaire (81) de la poignée (6).

3. Instrument manuel selon la revendication 1 ou 2, **caractérisé en ce que** la poignée (6) et la tige (7) sont maintenues l'une contre l'autre par un assemblage à fermeture instantanée, de préférence un dispositif à enclenchement (83).

4. Instrument manuel médical ou dentaire selon l'une quelconque des revendications précédentes, **caractérisé en ce que** l'instrument manuel (1) forme une unité de traitement conjointement avec plusieurs moyens de traitement abrasifs contenus dans des réserves, avec différentes capacités d'enlèvement.

5. Instrument manuel selon l'une quelconque des revendications précédentes, **caractérisé en ce que** l'orifice de sortie (5) est réalisé au niveau d'une canule (27) ou d'une tête de canule (53), laquelle canule ou tête de canule est assemblée de manière amovible avec le manche (2) par l'intermédiaire d'un assemblage à fermeture instantanée, en particulier un assemblage à baïonnette ou un assemblage vissé, de préférence plusieurs canules (27) ou plusieurs têtes de canule (53), avec des formes et/ou des dimensions et/ou des dimensions d'orifice de sortie (5) différentes, étant prévues de manière permutable.

6. Instrument manuel selon la revendication 4 ou 5, **caractérisé en ce que** les types de moyens de traitement se différencient par des granulométries différentes et, de préférence, trois moyens de traitement différents sont prévus pour un traitement grossier, un traitement moyen et un traitement fin.

7. Instrument manuel selon l'une quelconque des revendications 4 à 6, **caractérisé en ce qu'**une dimension définie de l'orifice de sortie (5) est affectée à une granulométrie définie du moyen de traitement et les canules (27) ou têtes de canule (53) comportent un repère qui définit le moyen de traitement approprié, de préférence, les différents types de moyen de traitement comportant des couleurs différentes et les canules (27) ou têtes de canule (53) étant munies d'un repère dans la même couleur concernée.

8. Instrument manuel selon l'une quelconque des revendications précédentes, **caractérisé en ce que** le volume intérieur (8) du manche (2) est relié à la conduite d'admission (9) du gaz par l'intermédiaire d'un raccordement de conduite (101).

9. Instrument manuel selon l'une quelconque des revendications précédentes, **caractérisé en ce qu'**un clapet de non-retour (91) est agencé dans la conduite d'admission (9a) dans une position en amont du manchon d'accouplement (4).

10. Instrument manuel selon la revendication 9, **caractérisé en ce que** le clapet de non-retour (91) est agencé dans un insert (2) muni d'un élément d'accouplement (14b).

11. Instrument manuel selon l'une quelconque des revendications précédentes, **caractérisé en ce qu'**il comporte une réserve (3), dans laquelle débouche une conduite d'admission (66) avec au moins un orifice d'admission (73) et laquelle communique avec l'orifice de sortie (5) sur la poignée (6) par l'intermédiaire d'au moins un orifice de sortie intérieur (74) et une conduite de raccordement (9), l'orifice d'admission (73) et l'orifice de sortie intérieur (74) étant ménagés dans la partie centrale du logement (64) de la réserve (3).

12. Instrument manuel selon la revendication 11, **caractérisé en ce que** la conduite d'admission (66) ou la conduite de raccordement (9) est formée par un canal annulaire et l'autre conduite respective s'étend coaxialement à l'intérieur du canal annulaire.

13. Instrument manuel selon la revendication 11 ou 12, **caractérisé en ce que** la distance axiale entre l'orifice d'admission (73) et l'orifice de sortie (74) est faible, en particulier elle ne dépasse pas 30 mm environ, de préférence elle ne dépasse pas 10 mm à 15 mm environ.

14. Instrument manuel selon l'une quelconque des revendications 11 à 13, **caractérisé en ce que** l'orifice de sortie intérieur (74) est agencé en aval de l'orifice d'admission (73).

15. Instrument manuel selon l'une quelconque des revendications 11 à 14, **caractérisé en ce que** la conduite d'admission (66) et la conduite de raccordement (9) sont formées par une double gaine qui s'étend dans le logement (64) de la réserve (3).

16. Instrument manuel selon l'une quelconque des revendications précédentes, **caractérisé en ce que** l'orifice de sortie (5) est agencé au niveau de l'extrémité libre d'une canule (27) en saillie sur l'extrémité avant de la poignée (6) et **en ce que** la canule (27), par rapport à l'axe médian longitudinal (10) de la poignée (6), s'étend - à partir de cette dernière - d'abord en oblique en s'éloignant de celle-ci et son extrémité libre est amenée à nouveau à hauteur de celle-ci, de telle sorte que l'extrémité libre forme avec l'axe médian longitudinal un angle (W1) droit ou obtus.

17. Instrument manuel selon la revendication 15 ou 16, **caractérisé en ce que** la canule est formée par un tube extérieur (27a).

18. Instrument manuel selon la revendication 17, **caractérisé en ce que** dans le tube extérieur (27a) est agencé un tube intérieur (51) dont la section extérieure est inférieure à la section intérieure du tube extérieur (27a), de telle sorte qu'il se forme une fente (52) entre le tube extérieur (27a) et le tube intérieur (51).

19. Instrument manuel selon la revendication 17 ou 18, **caractérisé en ce qu'**un capuchon (53), de préférence convergent, est agencé sur l'extrémité libre de la canule (27) et **en ce que** le capuchon (53) est, en particulier, vissé avec le tube extérieur (27a).

20. Instrument manuel selon l'une quelconque des revendications précédentes, **caractérisé en ce qu'**il comporte une réserve (3), dans laquelle débouche une conduite d'admission (66) avec au moins un orifice d'admission (73) et laquelle communique avec l'orifice de sortie (5) sur la poignée (6) par l'intermédiaire d'au moins un orifice de sortie intérieur (74) et une conduite de raccordement (9), et **en ce que** la réserve (3) comporte un dispositif de décompression (92), qui assure une décompression avant l'ouverture de la réserve (3).

21. Instrument manuel selon la revendication 20, **caractérisé en ce que** la réserve (3) comporte un couvercle (61) et le dispositif de décompression (92) comporte un évidement (96) qui, au moment du dévissage du couvercle (61), forme un petit passage pour le gaz sous pression ou l'air comprimé, à travers lequel le gaz sous pression ou l'air comprimé peuvent s'échapper avant que le couvercle (61) soit totalement dévissé.

22. Instrument manuel selon la revendication 21, **caractérisé en ce que** l'évidement (96) est formé par un ou plusieurs aplatissements (97) répartis sur le pourtour, lesquels sont ménagés sur une paroi latérale (98) circulaire d'une saillie circulaire (99) munie d'un filetage.

23. Instrument manuel selon la revendication 22, **caractérisé en ce que** la saillie circulaire (99), dans sa zone de bordure libre, coopère avec la bague d'étanchéité (94).
